# NEUE EUROPÄISCHE PATENTSCHRIFT

(11) **EP 2 161 638 B2**
(45) Veröffentlichungstag und Bekanntmachung des Hinweises auf die Entscheidung über den Einspruch: **05.03.2014**
(45) Hinweis auf die Patenterteilung: 21.12.2011
(21) Anmeldenummer: 08015780.3
(22) Anmeldetag: 08.09.2008
(51) Int. Cl.: G05B 19/418, G05B 19/042

(54) **Automatisierungssystem, Gerät zur Verwendung in einem Automatisierungssystem und Verfahren zum Betreiben eines Automatisierungssystems**
Automation system, device for use in an automation system and method for operating an automation system
Système d'automatisation, appareil destiné à l'utilisation dans un système d'automatisation et procédé de fonctionnement d'un système d'automatisation

(43) Veröffentlichungstag der Anmeldung: 10.03.2010
(73) Patentinhaber: Siemens Aktiengesellschaft, 80333 München (DE)
(72) Erfinder: Beyer, Stefan, 92263 Ebermannsdorf (DE); Gebuhr, Harald, 90409 Nürnberg (DE); Keil, Rainer, 90451 Nürnberg (DE); Wiesgickl, Bernhard, 92249 Vilseck (DE); Bäumler, Andreas, 92702 Kohlberg (DE); Daimer, Martin, 91058 Erlangen (DE)

(56) Entgegenhaltungen:
- EP-A- 1 312 992
- EP-A- 1 349 024
- EP-A1- 1 312 992
- DE-A1- 10 140 861
- DE-A1- 10 248 100
- DE-A1- 10 248 100
- DE-A1-102004 061 013
- DE-A1-102006 032 217
- VOLZ M: "DIE PNO STELLT EIN NEUES PROFIBUS-PROFIL FUER SICHERHEITSGERICHTETEANWENDUNGEN VOR. PROFISAFE FUER DIE SICHETHEITSTECHNIK" MESSEN UND PRUFEN, IVA INTERNATIONAL, MUNCHEN, DE, Bd. 35, Nr. 5, 1. Mai 1999 (1999-05-01), Seiten 6-08, XP000896541 ISSN: 0937-3446
- G. NELLES: "Kommunikationsstandard für Feldgeräte" MPA, April 2007 (2007-04), Seiten 48-50, XP002507677

## Beschreibung

Die Erfindung betrifft ein Automatisierungssystem, welches ein Quell-Gerät umfasst, das an ein erstes Feldbussystem angeschlossen ist, das auf einem ersten Kommunikationsprotokoll zum Austausch von Telegrammen zwischen an das erste Feldbussystem angeschlossenen Geräten basiert. Das Automatisierungssystem umfasst weiter ein mit dem ersten Feldbussystem unmittelbar oder über zumindest ein zweites Feldbussystem, das auf einem zweiten Kommunikationsprotokoll zum Austausch von Telegrammen zwischen an das zweite Feldbussystem angeschlossenen Geräten basiert, mittelbar gekoppeltes Gerät eines Punkt-zu-Punkt-Kommunikationssystems. Ferner umfasst das Automatisierungssystem zumindest ein Ziel-Gerät, das über eine jeweilige Leitung an das Gerät angeschlossen ist und über ein drittes, Punkt-Zu-Punkt-Kommunikationsprotokoll mit dem Gerät Telegramme austauschen kann.

Die Erfindung betrifft ferner ein Ziel-Gerät, insbesondere einen Sensor oder Aktuator, dessen Kommunikation auf einem Punkt-zu-Punkt-Kommunikationsprotokoll basiert zur Verwendung in einem gattungsgemäßen Automatisierungssystem.

Schließlich betrifft die Erfindung ein Verfahren zum Betreiben eines derartigen Automatisierungssystems.

Die DE 102 48 100 A1 offenbart ein Automatisierungssystem mit einem Quellgerät, das an ein erstes Feldbussystem angeschlossen ist, das auf einem ersten Kommunikationsprotokoll zum Austausch von Telegrammen zwischen an das erste Feldbussystem angeschlossenen Geräten basiert, mit einem mit dem ersten Feldbussystem gekoppeltes Steuergerät eines Punkt-Zu-Punkt-Kommunikationssystems, mit einem Zielgerät, das über eine Leitung an das Steuergerät angeschlossen ist und über ein weiteres, Punkt-Zu-Punkt-Kommunikationsprotokoll mit dem Steuergerät Telegramme austauschen kann, wobei das Steuergerät und das Zielgerät derart ausgeführt sind, dass eine sicherheitsgerichtete Kommunikation zwischen dem Quellgerät und dem Zielgerät ausführbar ist.

Aus der EP 1 349 024 A2 geht eine Kopplungsvorrichtung zum Ankoppeln von Geräten an einem Bussystem hervor. Die Kommunikation zwischen den Geräten, das heißt, das Senden und/oder Empfangen von Daten über das Bussystem, erfolgt dabei über ein erstes, beliebig vorgegebenes Kommunikationsprotokoll. Es ist zumindest eine geräteseitige Schnittstelle zum Anschließen eines Gerätes an die Kopplungsvorrichtung vorgesehen, wobei die geräteseitige Schnittstelle zur Kommunikation mit dem Gerät über ein zweites, von dem Busprotokoll verschiedenes, standardisiertes Kommunikationsprotokoll ausgebildet ist. Weiterhin ist zumindest eine busseitige Schnittstelle zum Anschließen der Kopplungsvorrichtung an das Bussystem vorgesehen, wobei die busseitige Schnittstelle zur Kommunikation mit dem Bussystem über das Busprotokoll ausgebildet ist. Die Kopplungsvorrichtung umfasst eine Protokollumsetzeinheit, durch die über die busseitige Schnittstelle empfangene Daten in das standardisierte Kommunikationsprotokoll und übe die geräteseitige Schnittstelle empfangene Daten in das Busprotokoll umsetzbar sind.

In einem Automatisierungssystem werden die über einen oder mehrere Feldbussysteme angeschlossenen Geräte durch eine zentrale Steuerungseinheit gesteuert. Die zentrale Steuerungseinheit ist zum Beispiel eine speicherprogrammierbare Steuerung (SPS), welche ein darin gespeichertes Anwendungsprogramm zur Steuerung der Geräte ausführt. Der Zugriff auf die Geräte beziehungsweise die Kommunikation mit den Geräten erfolgt über den oder die Feldbussysteme.

In manchen Automatisierungssystemen ist eine sicherheitsgerichtete Anbindung der Feldgeräte notwendig oder erwünscht. Die sicherheitsgerichtete Anbindung erfolgt entweder über eine redundant ausgeführte Parallelverdrahtung (Duplizität der Feldgeräte) oder über ein gesichertes Kommunikationsprotokoll. Die redundante ausgeführte Parallelverdrahtung bedient jedoch einen hohen Verdrahtungsaufwand. Die Übertragung von Zusatzinformationen erfordert gegebenenfalls die Nutzung weiterer Schnittstellen, so dass dann ein noch erhöhter Verdrahtungsaufwand die Folge ist. Ein gesichertes Kommunikationsprotokoll ist beispielsweise der Kommunikationsstandard PROFIsafe, welches in Feldbussystemen gemäß dem Kommunikationsstandard PROFIBUS oder PROFINET zur Anwendung gelangen kann.

Während das oder die Feldbussysteme auf einer Bus-Kommunikation basieren, bei der sämtliche an ein Feldbussystem angeschlossenen Geräte eine über die Busleitung übertragene Nachricht erhalten und dann entscheiden, ob diese für das betreffende Gerät sind oder nicht, erfolgt die Anbindung von Sensoren und Aktuatoren häufig durch ein Punkt-zu-Punkt-Kommunikationssystem. Ein solches Punkt-zu-Punkt-Kommunikationssystem stellt beispielsweise der Kommunikationsstandard IO-Link dar. Dieses Kommunikationssystem ist über ein Gateway mit einem übergeordneten Feldbussystem gekoppelt.

Während zwischen Geräten eines oder mehrerer Feldbussysteme eine sicherheitsgerichtete Kommunikation möglich ist, ist diese für Geräte eines Punkt-zu-Punkt-Kommunikationssystems bislang nicht möglich. Das Abschalten eines Aktuators in einem Punkt-zu-Punkt-Kommunikationssystem erfolgt beispielsweise durch Abschalten seiner Versorgungsspannung. Dabei wird ein in die sicherheitsgerichtete Kommunikation eingebundenes Gerät des Automatisierungssystems durch die zentrale Steuerung angesprochen. Das Gerät ist in der Lage, die Versorgungsspannung des Aktuators zu schalten. Ein solches Konzept weist den Nachteil auf, dass ein Fehler in dem Aktuator gegebenenfalls unentdeckt bleibt und damit die Funktion des Automatisierungssystems beeinträchtigen kann.

Es ist daher Aufgabe der vorliegenden Erfindung, ein Automatisierungssystem anzugeben, bei dem die Sicherheit im Betrieb erhöht werden kann. Es ist ferner Aufgabe der Erfindung, ein Gerät zur Verwendung in einem Automatisierungssystem anzugeben, welches eine erhöhte Sicherheit in einem Automatisierungssystem erlaubt. Schließlich ist es Aufgabe der Erfindung, ein Verfahren zum Betreiben eines Automatisierungssystems anzugeben, welches eine verbesserte Sicherheit bereitstellt.

Diese Aufgaben werden durch ein Automatisierungssystem mit den Merkmalen des Patentanspruchs 1, ein Ziel-Gerät mit den Merkmalen des Patentanspruchs 8 sowie ein Verfahren mit den Merkmalen des Patentanspruchs 11 gelöst. Vorteilhafte Ausgestaltungen ergeben sich jeweils aus den abhängigen Patentansprüchen.

Die Erfindung schafft ein Automatisierungssystem, das ein Quell-Gerät umfasst, das an ein erstes Feldbussystem angeschlossen ist, das auf einem ersten Kommunikationsprotokoll zum Austausch von Telegrammen zwischen an das erste Feldbussystem angeschlossenen Geräten basiert. Das Quell-Gerät kann beispielsweise eine Steuerung des Automatisierungssystems darstellen. Das Automatisierungssystem umfasst weiter ein mit dem ersten Feldbussystem unmittelbar gekoppeltes.Steuergerät eines Punkt-zu-Punkt-Kommunikationssystems. Alternativ kann das Steuergerät des Punkt-zu-Punkt-Kommunikationssystems über zumindest ein zweites Feldbussystem, das auf einem zweiten Kommunikationsprotokoll zum Austausch von Telegrammen zwischen an das zweite Feldbussystem angeschlossenen Geräten basiert, mittelbar mit dem ersten Feldbussystem gekoppelt sein. Das Automatisierungssystem umfasst ferner zumindest ein ZielGerät, das über eine jeweilige Leitung an das Steuergerät angeschlossen ist und über ein drittes, Punkt-zu-Punkt-Kommunikationsprotokoll mit dem Gerät Telegramme austauschen kann. Erfindungsgemäß sind das Steuergerät und das Ziel-Gerät derart ausgeführt, dass eine sicherheitsgerichtete Kommunikation zwischen dem Quell-Gerät und dem Ziel-Gerät ausführbar ist.

Erfindungsgemäß wird die sicherheitsgerichtete Kommunikation über die Feldbussysteme hinaus auch auf das Punkt-zu-Punkt-Kommunikationssystem ausgedehnt. Abzusichernde Daten werden damit zwischen den beiden sicherheitsgerichteten Endpunkten, dem Quell-Gerät und dem Ziel-Gerät, übertragen. Die Übertragung erfolgt bevorzugt unter Verwendung eines Tunnels, womit keine sicherheitsgerichtete Umsetzung zweier unterschiedlicher Protokolle in dem Steuergerät des Punkt-zu-Punkt-Kommunikationssystems notwendig ist. Eine sicherheitsgerichtete Kommunikation ist sowohl vom Quell-Gerät zum Ziel-Gerät als auch in umgekehrter Richtung vorgesehen.

Als Ziel-Gerät können insbesondere Sensoren oder Aktuatoren eingesetzt werden.

Ein erfindungsgemäßes Automatisierungssystem ermöglicht die Verwendung von bereits im Feldeinsatz bewährten Feldbussystemen und Kommunikationsprotokollen für die sicherheitsgerichtete Kommunikation. Das erste Feldbussystem basiert auf dem Kommunikationsstandard PROFINET. Das zweite Feldbussystem basiert auf dem Kommunikationsstandard PROFIBUS. Bei diesen Kommunikationsstandards ist die Verwendung des sicherheitsgerichteten Protokolls PROFIsafe bereits realisiert. Das Punkt-zu-Punkt-Kommunikationssystem basiert auf dem Kommunikationsstandard IO-Link. Das etablierte Kommunikationsprotokoll "PROFIsafe" wird insbesondere auf die über IO-Link über ein übergeordnetes Automatisierungssystem eingebundenen Ziel-Geräte ausgedehnt.

Für den Kommunikationsstandard PROFIsafe sind alle für eine Risikobetrachtung notwendigen Daten bereits bekannt, so dass eine Implementierung in einem Automatisierungssystem auf besonders einfache Weise möglich ist. Dieser Kommunikationsstandard weist darüber hinaus den Vorteil auf, dass Kosten zur Sicherheitstechnik nur dort anfallen, wo Sicherheitstechnik auch tatsächlich benötigt wird, da der Kommunikationsweg zwischen den beiden sicherheitsgerichteten Endpunkten, das heißt zwischen dem Quell-Gerät und dem Ziel-Gerät inklusiv sämtlicher auf dem Kommunikationsweg platzierten Hardware-Geräten, aus Standard-Komponenten aufgebaut werden kann.

Das Ziel-Gerät weist eine Adresse gemäß dem verwendeten sicherheitsgerichteten Kommunikationsprotokoll auf. Wird als sicherheitsgerichtetes Kommunikationsprotokoll PROFIsafe verwendet, so weist das Ziel-Gerät eine F-Adresse auf. Die Adresse kann schalterlos durch eine Parametrierung oder über einen Hardware-Schalter, insbesondere einen DIL- oder DIP-Schalter, vergeben sein. Die Parametrierung der F-Adresse könnte zum Beispiel über ein sogenanntes Port Configuration Tool (PCT) erfolgen.

Zweckmäßigerweise ist die sichere Kommunikation zwischen dem Quell-Gerät und dem Ziel-Gerät derart ausgebildet, dass diese die Kommunikationsprotokolle des ersten und optional zweiten Feldbussystems sowie des Punkt-zu-Punkt-Kommunikationssystems nutzen. Hierdurch sind keine Änderungen in den Kommunikationsprotokollen der jeweiligen Feldbussysteme beziehungsweise des Punkt-zu-Punkt-Kommunikationssystems notwendig. Die sicherheitsrelevanten Informationen werden in den jeweiligen Telegrammen übertragen.

Das Steuergerät des Punkt-zu-Punkt-Kommunikationssystems ist gemäß einer weiteren Ausgestaltung über einen Koppler oder direkt an das erste oder zweite Feldbussystem angeschlossen.

Die Erfindung schafft weiter ein Ziel-Gerät, insbesondere einen Sensor oder Aktuator, dessen Kommunikation auf einem Punkt-zu-Punkt-Kommunikationsprotokoll basiert, zur Verwendung in einem erfindungsgemäßen Automatisierungssystem. Dieses umfasst ein Mittel zur Durchführung einer sicherheitsgerichteten Kommunikation gemäß dem Standard PROFIsafe mit einem Quell-Gerät, das an ein erstes Feldbussystem angeschlossen ist, welches auf einem ersten Kommunikationsprotokoll zum Austausch von Telegrammen zwischen an das erste Feldbussystem angeschlossenen Geräten basiert. Das Ziel-Gerät kann beispielsweise durch einen Laserscanner, ein Lichtgitter, einen Positionsschalter, einen Notaustaster, einen Motorstarter, ein Ventil oder ein anderes Antriebsgerät gebildet sein.

Um einen sicherheitsgerichteten Endpunkt in dem Automatisierungssystem darstellen zu können, weist das Ziel-Gerät eine Adresse für die sicherheitsgerichtete Kommunikation mit dem Quell-Gerät auf. Hierdurch ist die getunnelte Übertragung sicherheitsgerichteter Daten zwischen dem Ziel-Gerät des Aktualisierungssystems möglich.

Gemäß einer weiteren Ausgestaltung ist in diesem zur sicheren Behandlung eines sicherheitsgerichteten Telegramms ein Stack des verwendeten sicherheitsgerichteten Kommunikationsprotokolls implementiert.

Es ist weiter zweckmäßig, wenn das Ziel-Gerät dazu ausgebildet ist, einen Frame-Type (einen Telegrammtyp) zwischen dem Ziel-Gerät und dem Steuer-Gerät des Punkt-zu-Punkt-Kommunikationssystems zu übertragen, welcher ein Telegramm des für die sicherheitsgerichete Kommunikation verwendeten Übertragungsprotokolls in einem Zyklus konsistent übertragen kann.

Ein erfindungsgemäßes Verfahren zum Betreiben eines Automatisierungssystems gemäß der oben beschriebenen Art umfasst den Schritt des Durchführens einer sicherheitsgerichteten Kommunikation zwischen dem Quell-Gerät und dem Ziel-Gerät.

In einer weiteren Ausgestaltung des Verfahrens wird als Frame-Type zwischen dem Ziel-Gerät und dem Steuergerät des Punkt-zu-Punkt-Kommunikationssystems ein Telegramm übertragen, welches ein Telegramm des für die sicherheitsgerichtete Kommunikation verwendeten Übertragungsprotokolls in einem Zyklus konsistent überträgt.

Gemäß einer weiteren Ausgestaltung wird das Ziel-Gerät bei einer ersten Datenrate betrieben, so dass bei etwa gleich bleibender Zykluszeit zu einer im Standardfall verwendeten zweiten geringeren Datenrate das durch die sicherheitsgerichtete Kommunikation erhöhte Datenvolumen übertragen werden kann. Ist das Punkt-zu-Punkt-Kommunikationssystem gemäß dem Standard IO-Link ausgebildet, so beträgt die erste Datenrate 230.400 Bd, was der Betriebsart COM3 entspricht. In der im Standardfall verwendeten Betriebsart COM2 beträgt die zweite Datenrate 38.400 Bd.

Sicherheitsgerichtete Daten zwischen dem Quell-Gerät und dem Ziel-Gerät werden getunnelt übertragen.

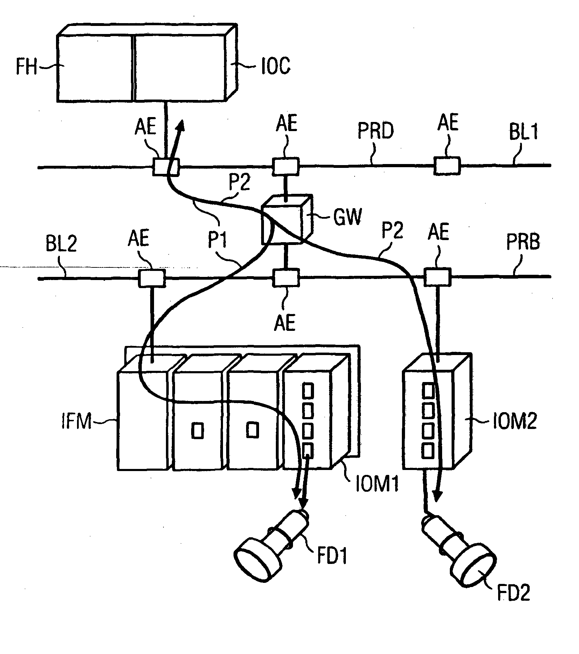

Die Erfindung wird nachfolgend näher anhand eines Ausführungsbeispiels erläutert. Die einzige Figur zeigt in einer schematischen Darstellung ein erfindungsgemäßes Automatisierungssystem.

Das erfindungsgemäße Automatisierungssystem umfasst ein Quell-Gerät FH, das über einen IO-Controller IOC an ein erstes Feldbussystem PRD angeschlossen ist. Das Quell-Gerät FH stellt einen Master des Automatisierungssystems dar. Das erste Feldbussystem PRD basiert beispielsweise auf dem Kommunikationsstandard PROFINET. Über ein Kopplungselement GW, ein sogenanntes Gateway, ist das erste Feldbussystem PRD an ein zweites Feldbussystem PRB angeschlossen. Das zweite Feldbussystem PRB kann beispielsweise auf dem Kommunikationsstandard PROFIBUS basieren. An jedes der beiden Feldbussysteme PRD, PRB kann eine Anzahl an Geräten angeschlossen werden, welche Slaves des jeweiligen Automatisierungssystems sind. Der Anschluss erfolgt jeweils über ein Anschlusselement AE an eine jeweilige Busleitung BL1 oder BL2. Jeder an das erste Feldbussystem PRD angeschlossene Slave kann gemäß einem für das Feldbussystem spezifischen Kommunikationsprotokoll von dem Quell-Gerät FH Nachrichten oder Kommandos empfangen. Über das Kopplungsgerät GW ist in bekannter Weise auch eine Kommunikation des Quell-Geräts FH mit Slaves des zweiten Feldbussystems PRD möglich.

Als Geräte des zweiten Feldbussystems PRB sind Steuergeräte IOM1 und IOM2 an dieses angeschlossen. Während das Steuergerät IOM2 direkt mit dem zweiten Feldbussystem PRB verbunden ist, ist das Steuergerät IOM1 über ein Interface-Modul IFM mit dem zweiten Feldbussystemen PRB verbunden. Die Steuergeräte IOM1 und IOM2 stellen Geräte eines Punkt-zu-Punkt-Kommunikationssystems dar, an das jeweils eine Anzahl an Ziel-Geräten FD1 beziehungsweise FD2 anschließbar sind. Jedes der Ziel-Geräte FD1 beziehungsweise FD2 ist hierbei über eine eigene Kommunikationsleitung mit dem zugeordneten Steuergerät IOM1 beziehungsweise IOM2 verbunden. Im Ausführungsbeispiel der Erfindung ist beispielhaft jeweils nur ein Ziel-Gerät FD1 und FD2 für jedes der Steuergeräte IOM1 und IOM2 dargestellt.

Bei den Ziel-Geräten FD1 beziehungsweise FD2 handelt es sich um Sensoren oder Aktuatoren. Ein als Sensor ausgebildetes Ziel-Gerät kann beispielsweise ein Laserscanner, ein Lichtgitter, ein Positionsschalter oder ein Notaustaster darstellen. Ein als Aktuator ausgebildetes Ziel-Gerät kann beispielsweise einen Motorstarter, ein Ventil oder ein anderes Antriebsgerät darstellen.

Das zwischen dem Steuer-Gerät IOM1 und dem Ziel-Gerät FD1 beziehungsweise dem Steuer-Gerät IOM2 und dem Ziel-Gerät FD2 gebildete Punkt-zu-Punkt-Kommunikationssystem basiert auf dem Standard IO-Link.

In dem in der Figur dargestellten Automatisierungssystem repräsentiert das Quell-Gerät eine Automatisierungssteuerung, zum Beispiel eine SPS, welche ein Anwendungsprogramm zur Steuerung des Automatisierungssystems ausführt. Der Zugriff auf jedes der an dem ersten und/oder dem zweiten Feldbussystem angeschlossene Gerät erfolgt über das feldbussystemspezifische Kommunikationsprotokoll, welches gegebenenfalls über das Kopplungselement GW sowie das Interface-Modul IFM in ein Kommunikationsprotokoll des ausgangsseitig angeschlossenen Feldbussystems beziehungsweise Kommunikationssystems "gewandelt" wird.

Zur Absicherung der Kommunikation zwischen dem Quell-Gerät FH und einem jeweiligen Ziel-Gerät FD1, FD2 wird auf ein sicherheitsgerichtetes Kommunikationsprotokoll zurückgegriffen. Im Falle eines als PROFINET und PROFIBUS ausgebildeten Feldbussystems bietet sich der sicherheitsgerichtete Kommunikationsstandard PROFIsafe an, auf den nachfolgend Bezug genommen wird. Erfindungsgemäß wird dieses etablierte Kommunikationsprotokoll, auf dem die über einen Punkt-zu-Punkt-Kommunikationssystem in ein übergeordnetes Automatisierungssystem eingebundenen Ziel-Geräte FD1, FD2 ausdehnt.

Die Geräte IOM1, IOM2 werden gemäß der IO-Link-Spezifikation als sogenannte IO-Link-Master bezeichnet. Für die sicherheitsgerichtete Kommunikation zwischen dem Quell-Gerät, das auch als F-Host bezeichnet wird, und dem jeweiligen ZielGerät FD1, FD2, welche auch als F-Devices (beziehungsweise IO-Link F-Devices) bezeichnet werden, ergeben sich die in der Figur mit P1 und P2 gekennzeichneten Kommunikationspfade. Dabei ist lediglich die Kommunikation zwischen dem Quell-Gerät FH und dem betreffenden Ziel-Gerät FD abgesichert, wohingegen die Pfade P1 beziehungsweise P2 nicht gesichert sind.

Um die Realisierung des Profisafe-Kommunikationsprotokolls in einem IO-Link-Punkt-zu-Punkt-Kommunikationssystem zu ermöglichen, ist eine Erweiterung der sogenannten Frame-Types, welche zwischen dem Steuer-Gerät IOM1 und dem Ziel-Gerät FD1 beziehungsweise dem Steuer-Gerät IOM2 und dem Ziel-Gerät FD2 ausgetauscht werden, um Telegramme notwendig, die ein PROFIsafe-Telegramm in einem Zyklus konsistent übertragen können. Ein PROFIsafe-Telegramm weist mindestens 4 Byte und maximal 16 Byte auf. Für die Ziel-Geräte FD1, FD2 hat dies eine entsprechend sichere Behandlung des PROFIsafe-Telegramms zur Folge, was durch die Verwendung des in den Ziel-Geräten FD1, FD2 implementierten PROFIsafe-Stacks sichergestellt werden kann.

Die Anwendung des PROFIsafe-Kommunikationsprotokolls erfordert eine PROFIsafe-Adresse. Entsprechend ist eine PROFIsafe-Adresse eine so genannte F-Adresse in den Ziel-Geräten FD1, FD2 vorgesehen. Die Vergabe oder Einstellung der F-Adresse kann durch Einstellung am so genannten IO-Link-Device, zum Beispiel vermittels eines DIL oder DIP-Schalters bewerkstelligt werden. Ebenso ist eine Parametrierung der F-Adresse über ein Konfigurationsmittel, zum Beispiel das Port-Configuration-Tool PCT möglich. Die Vergabe beziehungsweise Einstellung der Adresse auf dem Ziel-Gerät FD1, FD2 kann ebenso schalterlos erfolgen.

Das sich aus der Anwendung des Profisafe-Kommunikationsprotokolls ergebende höhere Datenvolumen kann dadurch berücksichtigt werden, dass die Kommunikation zwischen dem Steuergerät IOM1 und dem Ziel-Gerät FD1 beziehungsweise dem Steuergerät IOM2 und dem Ziel-Gerät FD2 mit der in der IO-Link-Spezifikation definierten Betriebsart "COM3" bei etwas gleichbleibender Zykluszeit zu der im Standardfall verwendeten Betriebsart "COM2" erfolgt. In der Betriebsart COM3 erfolgt eine Datenübertragung mit 230.400 Bd. In der Betriebsart COM2 erfolgt eine Datenübertragung mit lediglich 38.400 Bd.

Der Vorteil des Vorgehens besteht darin, dass bei den Steuergeräten IOM1, IOM2 bezüglich der sicherheitsgerichteten Kommunikation keine Zusatzmaßnahmen erforderlich sind. Diese müssen lediglich die neuen Frame-Types unterstützen, solange die Steuergerät IOM1, IOM2 in ein übergeordnetes Automatisierungssystem eingebunden sind. Dies bedeutet, die Geräte IOM1, IOM2 müssen lediglich eine Gateway-Funktionalität aufweisen.

Mit der Erfindung lassen sich folgende Vorteile realisieren.

Es können bereits seit Jahren im Feldeinsatz bewährte Kommunikationsprotokolle für die sicherheitsgerichtete Kommunikation verwendet werden. Das Kommunikationsprotokoll erlaubt die Übertragung von sicherheitsgerichteten Daten sowohl von dem Quell-Gerät zu dem Ziel-Gerät, als auch in umgekehrter Richtung.

Für das Kommunikationsprotokoll Profisafe liegen alle für die zugehörige Risikobetrachtung notwendigen Daten bereits vor. Kosten für Sicherheitstechnik fallen lediglich dort an, wo die Sicherheitstechnik auch wirklich benötigt wird, da der gesamte Kommunikationsweg von dem fehlersicheren Quell-Gerät bis zum sicherheitsgerichteten Ziel-Gerät inklusive aller auf dem Weg platzierten Hardware-Komponenten aus Standard-Komponenten aufgebaut werden kann.

Sicherheitsgerichtete Daten werden zwischen dem Quell-Gerät und dem Ziel-Gerät zwischen beiden sicherheitsgerichteten Endpunkten getunnelt übertragen. Damit ist keine sicherheitsgerichtete Umsetzung zweiter Protokolle in dem Master des Punkt-zu-Punkt-Kommunikationssystems notwendig.

## Patentansprüche

1. Automatisierungssystem, umfassend
- ein Quell-Gerät (FH), das an ein erstes Feldbussystem (PRD) angeschlossen ist, das auf einem ersten Kommunikationsprotokoll zum Austausch von Telegrammen zwischen an das erste Feldbussystem (PRD) angeschlossenen Geräten basiert,
- ein mit dem ersten Feldbussystem (PRD) unmittelbar oder über zumindest ein zweites Feldbussystem (PRB), das auf einem zweiten Kommunikationsprotokoll zum Austausch von Telegrammen zwischen an das zweite Feldbussystem (PRB) angeschlossenen Geräten basiert, mittelbar gekoppeltes Steuergerät (IOM) eines Punkt-zu-Punkt-Kommunikationssystems,
- zumindest ein Ziel-Gerät (FD), das über eine jeweilige Leitung an das Steuer-Gerät (IOM) angeschlossen ist und über ein drittes, Punkt-zu-Punkt-Kommunikationsprotokoll mit dem Steuergerät (IOM) Telegramme austauschen kann,
**dadurch gekennzeichnet, dass**
- das erste Feldbussystem auf dem Kommunikationsstandard PROFINET basiert,
- das Punkt-zu-Punkt-Kommunikationssystem auf dem Kommunikationsstandard IO-Link basiert,
- das Steuer-Gerät (IOM) und das Ziel-Gerät (FD) derart ausgeführt sind, dass zwischen dem Quell-Gerät (FH) und dem Ziel-Gerät (FD) eine sicherheitsgerichtete, getunnelte Kommunikation gemäß PROFIsafe ausführbar ist, wobei das Ziel-Gerät (FD) eine Adresse, insbesondere eine F-Adresse, gemäß dem verwendeten sicherheitsgerichteten Kommunikationsprotokoll aufweist.

2. Automatisierungssystem nach Anspruch 1, **dadurch gekennzeichnet, dass** das Ziel-Gerät (FD) ein Sensor oder Aktuator ist.

3. Automatisierungssystem nach einem der vorherigen Ansprüche, **dadurch gekennzeichnet, dass** das zweite Feldbussystem auf dem Kommunikationsstandard PROFIBUS basiert.

4. Automatisierungssystem nach einem der vorhergehenden Ansprüche, **dadurch gekennzeichnet, dass** die Adresse schalterlos durch eine Parametrierung oder über einen Hardware-Schalter, insbesondere einen DIL- oder DIP-Schalter vergeben ist.

5. Automatisierungssystem nach einem der vorherigen Ansprüche, **dadurch gekennzeichnet, dass** die sichere Kommunikation zwischen dem Quell-Gerät (FH) und dem Ziel-Gerät (FD) derart ausgebildet ist, dass diese die Kommunikationsprotokolle des ersten und optional zweiten Feldbussystems (PRD, PRB) sowie des Punkt-zu-Punkt-Kommunikationssystems (IOL) nutzen.

6. Automatisierungssystem nach einem der vorherigen Ansprüche, **dadurch gekennzeichnet, dass** das Steuergerät (IOM) des Punkt-zu-Punkt-Kommunikationssystems (IOL) über einen Koppler oder direkt an das erste oder zweite Feldbussystem (PRB, PRD) angeschlossen ist.

7. Automatisierungssystem nach einem der vorherigen Ansprüche, **dadurch gekennzeichnet, dass** das Quell-Gerät (FH) eine Steuerung des Automatisierungssystems ist.

8. Ziel-Gerät, insbesondere Sensor oder Aktuator, dessen Kommunikation auf einem Punkt-zu-Punkt-Kommunikationsprotokoll gemäß dem Kommunikationsstandard IO-Link basiert, zur Verwendung in einem Automatisierungssystem gemäß einem der vorherigen Ansprüche, **dadurch gekennzeichnet dass**, dieses ein Mittel zur Durchführung einer sicherheitsgerichteten, getunnelten Kommunikation gemäß dem Standard PROFIsafe, mit einem Quell-Gerät (FH) aufweist, das an ein erstes Feldbussystem (PRD) angeschlossen ist, welches auf dem Kommunikationsstandard PROFINET zum Austausch von Telegrammen zwischen an das erste Feldbussystem (PRD) angeschlossenen Geräten basiert, wobei das Zielgerät (FD) eine Adresse für die sicherheitgerichtete Kommunikation mit dem Quell-Gerät (FH) aufweist.

9. Ziel-Gerät nach Anspruch 8, **dadurch gekennzeichnet, dass** in diesem zur sicheren Behandlung eines sicherheitsgerichteten Telegramms ein Stack des verwendeten sicherheitsgerichteten Kommunikationsprotokolls implementiert ist.

10. Ziel-Gerät nach Anspruch 8 oder 9, **dadurch gekennzeichnet, dass** dieses dazu ausgebildet ist, einen Frame-Type zwischen dem Ziel-Gerät (FD) und dem Steuergerät (IOM) des Punkt-zu-Punkt-Kommunikationssystem zu übertragen, welcher ein Telegramm des für die sicherheitsgerichtete Kommunikation verwendeten Übertragungsprotokolls in einem Zyklus konsistent übertragen kann.

11. Verfahren zum Betreiben eines Automatisierungssystems umfassend,
- ein Quell-Gerät (FH), das an ein erstes Feldbussystem (PRD) angeschlossen ist, das auf dem Kommunikationsstandard PROFINET zum Austausch von Telegrammen zwischen an das erste Feldbussystem (PRD) angeschlossenen Geräten basiert,
- ein mit dem ersten Feldbussystem (PRD) unmittelbar oder über zumindest ein zweites Feldbussystem (PRB), das auf einem zweiten Kommunikationsprotokoll zum Austausch von Telegrammen zwischen an das zweite Feldbussystem (PRB) angeschlossenen Geräten basiert, mittelbar gekoppeltes Steuergerät (IOM) eines Punkt-zu-Punkt-Kommunikationssystems,
- zumindest ein Ziel-Gerät (FD), das über eine jeweilige Leitung an das Steuer-Gerät (IOM) angeschlossen ist und über ein drittes, Punkt-zu-Punkt-Kommunikationsprotokoll gemäß dem Kommunikationsstandard IO-Link mit dem Steuergerät (IOM) Telegramme austauschen kann, **gekennzeichnet durch** den Schritt:
- Durchführung einer sicherheitsgerichteten, getunnelten Kommunikation zwischen dem Quell-Gerät (FH) und dem ZielGerät (FD) mittels PROFIsafe.

12. Verfahren nach Anspruch 11, **dadurch gekennzeichnet, dass** als Frame-Type zwischen dem Ziel-Gerät (FD) und dem Steuer-Gerät (IOM) des Punkt-zu-Punkt-Kommunikationssystems ein Telegramm übertragen wird, welches ein Telegramm des für die sicherheitsgerichtete Kommunikation verwendeten Übertragungsprotokolls in einem Zyklus konsequent überträgt.

13. Verfahren nach Anspruch 11 oder 12, **dadurch gekennzeichnet, dass** das Ziel-Gerät (FD) bei einer ersten Datenrate betrieben wird, so dass bei etwa gleichbleibender Zykluszeit zu einer im Standardfall verwendeten zweiten geringeren Datenrate das durch die sicherheitsgerichtete Kommunikation erhöhte Datenvolumen übertragen werden kann.

## Claims

1. Automation system, comprising
- a source device (FH), which is connected to a first field bus system (PRD), which is based on a first communication protocol for the exchange of telegrams between devices connected to the first field bus system (PRD),
- a control device (IOM) of a point to point communication system coupled to the first field bus system (PRD) directly or indirectly by way of at least one second field bus system (PRB), which is based on a second communication protocol for the exchange of telegrams between devices connected to the second field bus system (PRB),
- at least one destination device (FD), which is connected by way of a respective line to the control device (IOM) and can exchange telegrams with the control device (IOM) by way of a third, point to point communication protocol,
**characterised in that**
- the first field bus system is based on the PROFINET communication standard,
- the point to point communication system is based on the IO link communication standard
- the control device (IOM) and the destination device (FD) are embodied so that security-oriented tunnelled communication according to PROFIsafe can be executed between the source device (FH) and the destination device (FD), with the destination device (FD) having an address, in particular an F address, according to the security-oriented communication protocol used.

2. Automation system according to claim 1, **characterised in that** the destination device (FD) is a sensor or actuator.

3. Automation system according to one of the preceding claims, **characterised in that** the second field bus system is based on the PROFIBUS communication standard.

4. Automation system according to one of the preceding claims, **characterised in that** the address is assigned switchlessly by parameterization or by way of a hardware switch, in particular a DIL or DIP switch.

5. Automation system according to one of the preceding claims, **characterised in that** the secure communication between the source device (FH) and the destination device (FD) is configured so that they utilize the communication protocols of the first and optionally the second field bus system (PRD, PRB) as well as of the point to point communication system (IOL).

6. Automation system according to one of the preceding claims, **characterised in that** the control device (IOM) of the point to point communication system (IOL) is connected by way of a coupler or directly to the first or second field bus system (PRB, PRD).

7. Automation system according to one of the preceding claims, **characterised in that** the source device (FH) is a controller of the automation system.

8. Destination device, in particular a sensor or actuator, which communicates based on a point to point communication protocol according to the IO link communication standard, for use in an automation system according to one of the preceding claims, **characterised in that** it has means for performing security-oriented, tunnelled communication, according to the PROFIsafe standard, with a source device (FH), which is connected to a first field bus system (PRD), which is based on the PROFINET communication standard for the exchange of telegrams between devices connected to the first field bus system (PRD), the destination device (FD) having an address for security-oriented communication with the source device (FH).

9. Destination device according to claim 8, **characterised in that** a stack is implemented in it for the security-oriented communication protocol used for the secure processing of a security-oriented telegram.

10. Destination device according to claim 8 or 9, **characterised in that** it is configured to transmit a frame type between the destination device (FD) and the control device (IOM) of the point to point communication system, which can transmit a telegram of the transmission protocol used for security-oriented communication consistently in a cycle.

11. Method for operating an automation system comprising:
- a source device (FH), which is connected to a first field bus system (PRD), which is based on the PROFINET communication standard for the exchange of telegrams between devices connected to the first field bus system (PRD),
- a control device (IOM) of a point to point communication system coupled to the first field bus system (PRD) directly or indirectly by way of a least one second field bus system (PRB), which is based on a second communication protocol for the exchange of telegrams between devices connected to the second field bus system (PRB),
- at least one destination device (FD), which is connected by way of a respective line to the control device (IOM) and can exchange telegrams with the control device (IOM) by way of a third, point to point communication protocol according to the IO link communication standard,
**characterised by** the step:
- performing security-oriented tunnelled communication between the source device (FH) and the destination device (FD).

12. Method according to claim 11, **characterised in that** a telegram is transmitted as a frame type between the destination device (FD) and the control device (IOM) of the point to point communication system, which transmits a telegram of the transmission protocol used for security-oriented communication consistently in a cycle.

13. Method according to claim 11 or 12, **characterised in that** the destination device (FD) is operated at a first data rate, so that the data volume increased by security-oriented communication can be transmitted in the same cycle time at a second lower data rate used as standard.

## Revendications

1. Système d'automatisation, comprenant :
- un appareil source (FH) qui est connecté à un premier système de bus de champ (PRD) qui est basé sur un premier protocole de communication pour l'échange de télégrammes entre des appareils connectés au premier système de bus de champ (PRD) ;
- un appareil de commande (IOM) d'un système de communication point à point, lequel appareil est couplé au premier système de bus de champ (PRD), directement ou indirectement via au moins un deuxième système de bus de champ (PRB) qui est basé sur un deuxième protocole de communication pour l'échange de télégrammes entre des appareils connectés au deuxième système de bus de champ (PRB) ;
- au moins un appareil cible (FD) qui est connecté à l'appareil de commande (IOM) via une ligne respective et qui peut échanger des télégrammes avec l'appareil de commande (IOM) via un troisième protocole de communication point à point ;
**caractérisé en ce que** :
- le premier système de bus de champ est basé sur le standard de communication PROFINET ;
- le système de communication point à point est basé sur le standard de communication IO-Link ;
- l'appareil de commande (IOM) et l'appareil cible (FD) sont réalisés de manière telle qu'il est possible d'effectuer une communication tunnelisée et orienté sécurité selon PROFIsafe entre l'appareil source (FH) et l'appareil cible (FD), l'appareil cible (FD) présentant une adresse, et plus particulièrement une adresse F, conformément au protocole de communication orienté sécurité qui est utilisé.

2. Système d'automatisation selon la revendication 1, **caractérisé en ce que** l'appareil cible (FD) est un capteur ou un actionneur.

3. Système d'automatisation selon l'une des revendications précédentes, **caractérisé en ce que** le deuxième système de bus de champ est basé sur le standard de communication PROFIBUS.

4. Système d'automatisation selon l'une des revendications précédentes, **caractérisé en ce que** l'adresse est attribuée sans commutateur par un paramétrage ou via un commutateur hardware, et plus particulièrement un commutateur DIL ou DIP.

5. Système d'automatisation selon l'une des revendications précédentes, **caractérisé en ce que** la communication sécurisée entre l'appareil source (FH) et l'appareil cible (FD) se présente de manière telle que ceux-ci utilisent les protocoles de communication du premier et, optionnellement, du deuxième système de bus de champ (PRD, PRB) ainsi que du système de communication point à point (IOL).

6. Système d'automatisation selon l'une des revendications précédentes, **caractérisé en ce que** l'appareil de commande (IOM) du système de communication point à point (IOL) est connecté, via un coupleur ou directement, au premier ou au deuxième système de bus de champ (PRB, PRD).

7. Système d'automatisation selon l'une des revendications précédentes, **caractérisé en ce que** l'appareil source (FH) est une commande du système d'automatisation.

8. Appareil cible, en particulier capteur ou actionneur, dont la communication est basée sur un protocole de communication point à point selon le standard de communication IO-Link, destiné à être utilisé dans un système d'automatisation selon l'une des revendications précédentes, **caractérisé en ce que** celui-ci comporte un moyen pour exécuter une communication tunnelisée et orienté sécurité conformément au standard PROFIsafe, avec un appareil source (FH) qui est connecté à un premier système de bus de champ (PRD) qui est basé sur le standard de communication PROFINET pour l'échange de télégrammes entre des appareils connectés au premier système de bus de champ (PRD), l'appareil cible (FD) présentant une adresse pour la communication orientée sécurité avec l'appareil source (FH).

9. Appareil cible selon la revendication 8, **caractérisé en ce qu'**est implémentée dans celui-ci, en vue du traitement sécurisé d'un télégramme orienté sécurité, une pile du protocole de communication orienté sécurité qui est utilisé.

10. Appareil cible selon la revendication 8 ou 9, **caractérisé en ce que** celui-ci est réalisé pour transmettre, entre l'appareil cible (FD) et l'appareil de commande (IOM) du système de communication point à point, un type de trame qui peut transmettre de manière consistante, dans un cycle, un télégramme du protocole de transmission utilisé pour la communication orientée sécurité.

11. Procédé d'exploitation d'un système d'automatisation, comprenant :
- un appareil source (FH) qui est connecté à un premier système de bus de champ (PRD) qui est basé sur le standard de communication PROFINET pour l'échange de télégrammes entre des appareils connectés au premier système de bus de champ (PRD) ;
- un appareil de commande (IOM) d'un système de communication point à point, lequel appareil est couplé au premier système de bus de champ (PRD), directement ou indirectement via au moins un deuxième système de bus de champ (PRB) qui est basé sur un deuxième protocole de communication pour l'échange de télégrammes entre des appareils connectés au deuxième système de bus de champ (PRB) ;
- au moins un appareil cible (FD) qui est connecté à l'appareil de commande (IOM) via une ligne respective et qui peut échanger des télégrammes avec l'appareil de commande (IOM) via un troisième protocole de communication point à point selon le standard de communication IO-Link ;
**caractérisé par** l'étape suivante :
- exécution d'une communication tunnelisée et orientée sécurité entre l'appareil source (FH) et l'appareil cible (FD) au moyen de PROFIsafe.

12. Procédé selon la revendication 11, **caractérisé en ce qu'**est transmis, en tant que type de trame entre l'appareil cible (FD) et l'appareil de commande (IOM) du système de communication point à point, un télégramme qui transmet de manière consistante, dans un cycle, un télégramme du protocole de transmission utilisé pour la communication orientée sécurité.

13. Procédé selon la revendication 11 ou 12, **caractérisé en ce que** l'appareil cible (FD) fonctionne avec un premier débit de données de sorte que, pour un temps de cycle à peu près constant, il est possible de transmettre le volume de données accru du fait de la communication orientée sécurité avec un deuxième débit de données inférieur utilisé dans le cas standard.
